(19) **Europäisches Patentamt / European Patent Office / Office européen des brevets**

(11) **EP 4 476 561 B1**

(12) ## EUROPEAN PATENT SPECIFICATION

(45) Date of publication and mention
of the grant of the patent:
**08.04.2026 Bulletin 2026/15**

(21) Application number: **23701182.0**

(22) Date of filing: **11.01.2023**

(51) International Patent Classification (IPC):
*G01S 17/86* (2020.01)    *G01S 7/484* (2006.01)
*G01S 17/931* (2020.01)    *G06V 20/58* (2022.01)
*G01S 17/42* (2006.01)    *G06V 10/147* (2022.01)
*G06V 10/10* (2022.01)    *G06V 10/82* (2022.01)
*G06V 20/64* (2022.01)

(52) Cooperative Patent Classification (CPC):
**G01S 17/931; G01S 7/484; G01S 17/42;
G01S 17/86; G06V 10/147; G06V 10/16;
G06V 10/82; G06V 20/58; G06V 20/64**

(86) International application number:
**PCT/FI2023/050026**

(87) International publication number:
**WO 2023/152422 (17.08.2023 Gazette 2023/33)**

(54) **LIGHT-EMITTING DEVICE**

LICHTEMITTIERENDE VORRICHTUNG

DISPOSITIF ÉMETTEUR DE LUMIÈRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **11.02.2022 FI 20225123**

(43) Date of publication of application:
**18.12.2024 Bulletin 2024/51**

(73) Proprietor: **Teknologian tutkimuskeskus VTT Oy
02150 Espoo (FI)**

(72) Inventors:
- **PYYKÖNEN, Pasi**
  **02150 Espoo (FI)**
- **KUTILA, Matti**
  **02150 Espoo (FI)**

(74) Representative: **Boco IP Oy Ab
Kansakoulukatu 3
00100 Helsinki (FI)**

(56) References cited:
EP-A1- 3 553 556    US-A1- 2015 332 102
US-A1- 2017 061 632    US-A1- 2019 361 126
US-A1- 2020 018 854    US-A1- 2021 201 052

**Description**

TECHNICAL FIELD

This disclosure relates to Light Detection and Ranging (LiDAR) systems, and more particularly to a power control solution for a light-emitting device.

BACKGROUND

Automotive applications require advanced solutions for range and objects detection. LiDAR is a radar system that detects the position and velocity of a target by emitting laser beams. Advanced driver assistance systems and autonomous driving is intensively developing LiDAR-based systems and demands for higher resolution and improved detection range for use of LiDARs increase. However, the fundamental requirement for use of LiDARs in is that eye safety of other road users must not be compromised.

For example, solid state LiDAR typically uses a laser beam to illuminate the scene in front of it, and a time-of-flight (ToF) sensor array to capture the 3D data that is returned. These solid-state sensors have few to no moving parts, which makes them less expensive and more reliable than typical scanning LiDAR sensors. Mechanical LiDARs tend to be vulnerable for mechanical damages in the challenging conditions of vehicle use, so automotive industry has been keenly interested in solid state LiDAR development.

In solid state LiDARS the light beam is a multi-beam, a controlled combination of laser beams distributed to wide area. This avoids several drawbacks of the sequential measurements of scanning LiDARs, but echoes tend to be weak in far distance sensing. One solution would be to increase laser power, but automotive industry is naturally very cautious with eye-safety regulations.

Document US2021/0109217 A1 discloses a system for controlling power of laser lights emitted by an optical sensing device. The system detects an object, determines a distance to the object based on a returned laser beam and adjusts a laser emission scheme to reduce the total power to be incident on an eye-sized aperture at the distance. However, the returned laser beam determines distance to any detected object, and induces control functions based on the distance, notwithstanding whether the detected object is a vulnerable road user or not. This means that the system tends to unnecessarily lose laser power and sensing range. Furthermore, the measurement done with the LiDAR itself may cause hazardous laser emitting power before a vulnerable road user (VRU) (e.g. potential human shape) has been detected.

Document US2015/0332102 A1 discloses an object detection system for a vehicle. Objects are detected using an imaging device, image processor and ranging device. Detected objects are assigned a priority score that represents potential danger of the detected object to the vehicle.

Document US 2017/0061632 A1 discloses an electronic device with a camera, image segmentation mapper, LIDAR and depth mapper. The electronic device generates an image and a depth map of a scene.

Document US 2020/0018854 A1 discloses a camera-gated lidar system that receives an indication of a location and determines whether a solid object is present at the location. Document EP 3553556 A1 discloses a light modulating lidar apparatus in which laser intensity is adjusted in response to identifying objects susceptible to vision impairment from exposure to laser light.

BRIEF DESCRIPTION

The following examples describe ways to implement the claimed light-emitting device that enables improved LiDAR operation in vehicles without increasingly impairing eye safety of vulnerable road users.

According to an aspect of the invention, a device according to claim 1 is provided.

Advantageous embodiments are provided in the dependent claims.

BRIEF DESCRIPTION OF THE DRAWINGS

In the following, ways to implement the claimed light-emitting device are described in greater detail with reference to the accompanying drawings, in which

Figures 1a to 1c illustrate basic elements of a light-emitting device;
Figure 2 shows in 2D presentation a photographic lens;
Figure 3 depicts an exemplary computer system 300 for the control unit;
Figure 4 illustrates an example of a method implemented in the light-emitting device;
Figure 5 illustrates a further example of a method to be implemented in the light-emitting device;
Figure 6 depicts an exemplary stereo camera configuration;
Figure 7 illustrates a further example of a method to be implemented in the light-emitting device;
Figure 8 depicts an exemplary control unit configuration of image data; and
Figure 9 provides a simple illustration of operation of the control unit.

DETAILED DESCRIPTION

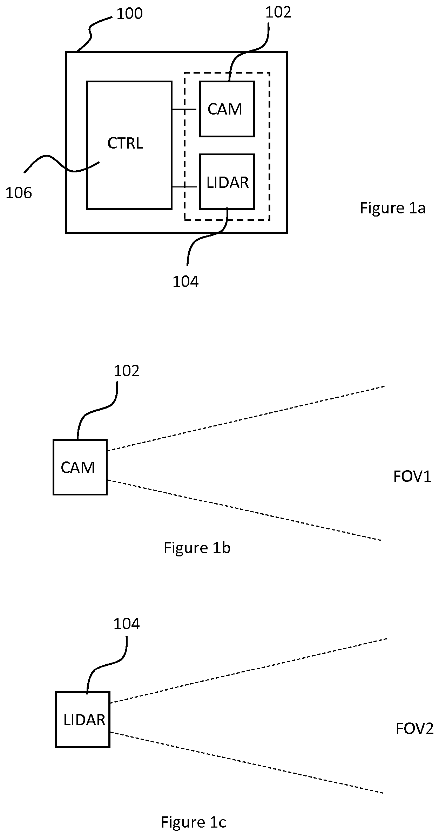

The schematic drawings of Figures 1a to 1c illustrate basic elements of a light-emitting device 100 discussed herein. The device 100 includes a camera unit 102, a LiDAR unit 104 and a control unit 106 shown in Figure 1a.

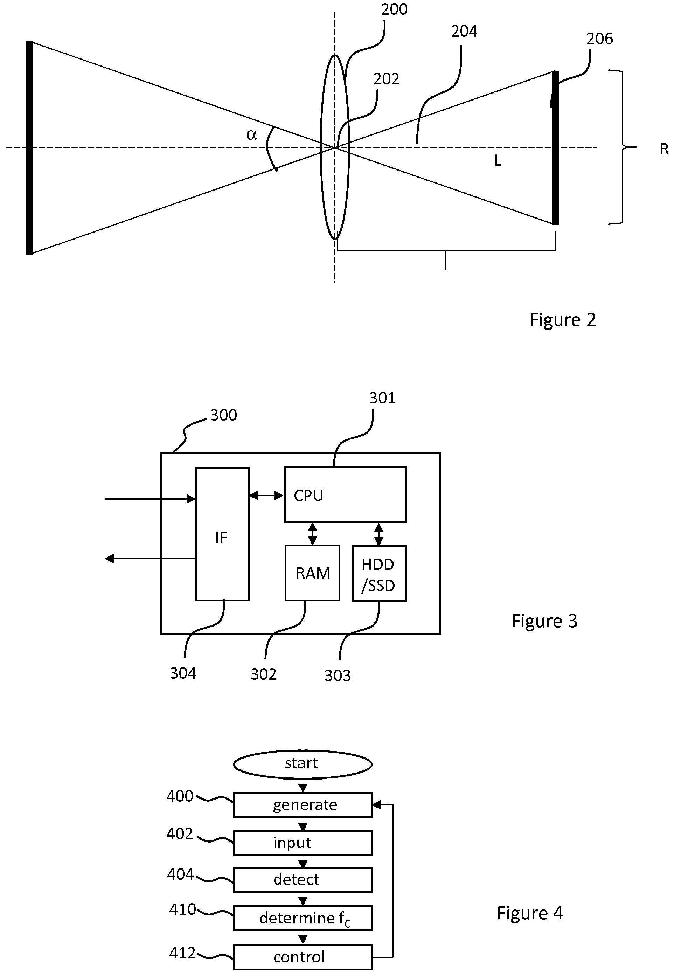

The camera unit refers here to an optical instrument that is configured to capture an image and record it in form of picture elements. These picture elements, pixels, represent samples of an original image and can be processed into digital code that can be used to reproduce and analyse the captured image. As shown in Figure 1b, the camera unit 102 is configured to have a first field of view FOV1. The field of view of optical instruments may be specified as an angular field of view, or as a linear field of view. The concepts are discussed in more detail with Figure 2.

Figure 2 shows in 2D presentation a photographic lens 200 that is formed to have an optical centre 202 and a specific focal length 204 from the optical centre 202 to a light-sensing image plane 206 of the camera unit. If we denote the focal length of the lens as L and a dimension of the image plane as R, the angular field of field $\alpha$ can be computed as

$$\alpha = 2 * \arctan (R/2L)$$

For a given distance D to objects, the linear field of view $F_{lin}$ can then be computed as

$$F_{lin} = 2 * (\tan (\alpha/2) * D)$$

The camera unit 102 may include one or more cameras, each configured with a directional photographic lens arrangement. A field of view of a camera may correspond to an image frame formed of a combination of the linear fields of view $F_{lin}$ that correspond with 2D dimensions of the image plane 206 of the camera. The first field of view FOV1 of the camera unit may then be considered to correspond to a combination of the linear fields of view of the one or more cameras that are operatively connected to provide image data for detection of vulnerable road users. The class of vulnerable road users may include, for example, humans and/or animals.

The LiDAR unit 104 refers herein to a light detection and ranging system that uses laser beams to create a point cloud representation of a surveyed environment. The LiDAR unit includes a laser system that emits signals according to a predefined scheme and a receiver system that senses and records returning, reflected signals. In operation, the laser system sends out a laser pulse, the receiver system measures the return signal, and the amount of time it takes for the pulse to bounce back is measured. As light moves at a constant speed, the LiDAR unit can accurately calculate the distance between itself and the target. As shown in Figure 1c, the LiDAR unit 104 is configured to have a second field of view FOV2, which is equal to the angle in which LiDAR signals are emitted. The LiDAR unit is advantageously a solid state LiDAR, but other types of LiDARs are included in the scope, as well.

In the example of Figure 1, the camera unit 102 is adapted for use in conjunction with the LiDAR unit 104.

Accordingly, the camera unit and the LiDAR unit are coupled in relation to each other so that the first field of view FOV1 and the second field of view FOV2 are directed to at least partially coincide. A part where the first and second fields of view FOV1, FOV2 coincide form a control field of view FOVC of the device. Accordingly, objects in the control field of view FOVC are at the same time included in the information received in the first field of view FOV1 of the camera unit 102 and in the information received in the second field of view FOV2 of the LiDAR unit 104.

The control unit 106 refers here to a computer system that is communicatively coupled to the camera unit 102 and the LiDAR unit 104 and is configured to control operation of the LiDAR unit 104 based on information it receives from the camera unit 102 in a manner to be described in more detail herein. Figure 3 depicts an exemplary computer system 300 for the control unit 106. In the simplest form, the control unit may be implemented as a general-purpose computer, which includes inter alia one or more CPUs 301, fast short-term memory 302, e.g. RAM, long term memory 303, e.g. hard disks or solid state drives, and an interface 304, through which the system 300 is connected to the camera unit 102 and the LiDAR unit 104. The system 300 could alternatively, or additionally, employ a sufficient quantity of non-volatile random access memory which acts as both fast short-term memory 302 and long-term memory 303. The interface may include also a network interface for communication with other computer systems. Each of the elements of the system 300 are internally communicatively coupled, either directly or indirectly, and provide means for performing systematic execution of operations on received and/or stored data according to predefined, essentially programmed processes. These operations comprise the procedures described herein for the control unit 106 of the light-emitting device 100 of Figure 1.

Figure 4 illustrates a first example of a method to be implemented in the light-emitting device 100 described in more detail with Figures 1 to 3. In operation, the camera unit generates (stage 400) a batch of image data in the first field of view FOV1. As discussed earlier, the image data in a camera unit frame may be originated from one or more operatively coupled cameras. Accordingly, the image data may be provided in form of image frames, in other words, one or more grids of pixels, each corresponding to a specific X times Y resolution camera unit frame.

The image data captured from the first field of view by the camera unit is input (stage 402) to the control unit that then detects (stage 404) from the image data objects that are in the field of control view of the device and belong to a class of vulnerable road users. For this purpose, the control unit 106 advantageously uses a real-time object detection model that is based on a neural network and is configured for this type of detection and classification task. A convolutional neural network is typically used to analyse visual imagery and is thus well applicable to process the input image data received from the camera unit. An example of such object detection models, well known to a person skilled in the art is You Only Look Once (YOLO), a fast object detection algorithm that determines bounding boxes from image data. In operation YOLO resizes an input image frame, runs a single convolutional network on the image, and thresholds the resulting detections by the model's confidence. Suitable programming functions for applying YOLO are available in, for example, Open Source Computer Vision Library (OpenCV).

The control unit may be triggered by the detection of a vulnerable road user of stage 404 to determine (stage 410) a control function $f_c$ for controlling transmission power of the LiDAR unit and implement the control function to control (stage 412) operation of the LiDAR unit. In order to maintain continuous eye-safe operation of the LiDAR, transmission power of the LiDAR unit is reduced when a vulnerable road user is detected. When no detection is made, i.e. when no vulnerable road user is in the control field of view FOVC, LiDAR unit may be controlled to operate in higher power level.

When the main objective is to ensure continuous eye-safe operation of the LiDAR unit, the first field of view FOV1 may be arranged to be essentially the same or at least slightly larger than the second field of view FOV2 so that the control field of view in practice corresponds to the extent of the second field of view FOV2. The control unit may then be configured to extend the detection of data objects from the control field of view FOVC to the first field of view FOV1. When the information for the LiDAR control operations is based on the larger first field of view FOV1 of the camera unit, eye-safe operation for the vulnerable road users in the smaller second field of view FOV2 is then more securely ensured.

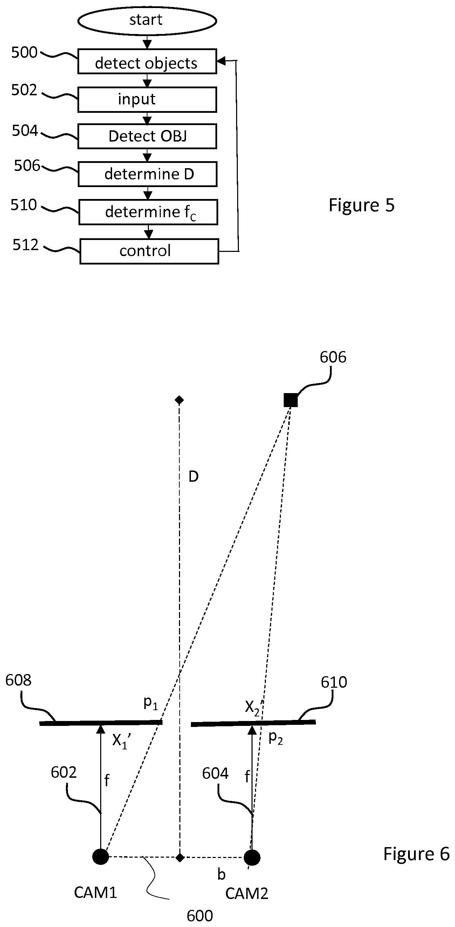

Figure 5 illustrates a further example of a method to be implemented in the light-emitting device 100. The beginning of the present example includes similar stages as the method of Figure 4. The camera unit generates (stage 500) frames of image data in the first field of view FOV1. In this example, the camera unit is a multicamera system that includes at least two operatively coupled cameras to create disparity image for range estimation. In each of the cameras, the image data may be provided as one or more grid of pixels, each corresponding to a specific X time Y resolution camera unit frame. Figure 6 depicts an exemplary configuration applicable for the purpose. The setup includes a first camera CAM1 and a second camera CAM2 set on a straight baseline 600 against a vertical plane.

The optical axis 602 of the first camera CAM1 and the optical axis 604 of the second camera CAM2 are mutually parallel and each axis is perpendicular to the baseline 600. The first field of view FOV1 in this example is thus formed by as a combination of fields of view of the cameras CAM1, CAM2 included in the camera unit.

Returning back to Figure 5, the image data captured from the first field of view by at least one of the cameras is input (stage 502) to the control unit. In the manner discussed with Figure 4, the control unit then detects (stage 504) from the image one or more data objects that are in the field of control view of the device and belong to a class of vulnerable road users.

In this example, in order to more optimally control the operation of the LiDAR unit, the control unit determines (stage 506) distances to the one or more detected objects and uses information on these distances to determine (stage 510) a control function to be implemented by the LiDAR unit.

As shown with Figure 6, distance D from the baseline 600 to the object 606 can be measured, for example, by means of disparity calculation when the object is on the overlapping viewpoint of the two cameras CAM1 and CAM2. A point in in an object that is visible in both cameras will be projected to a conjugate pair $p_1$, $p_2$ of image points. A point in an object detected in image frames of CAM1 and CAM2 thus appears at different positions in their respective image planes 608, 610. Disparity is the distance between this conjugate pair of points when the two images are superimposed. When the distance b between the cameras along the baseline 600 (the baseline distance), and the focal length of the cameras CAM1, CAM2 is known, the distance D to the point, i.e. the distance to the detected object, may be determined by disparities $x_1'$, $x_2'$ of the conjugate image points $p_1$, $p_2$ from:

$$ D = \frac{bf}{(x_1' - x_2')} $$

Other forms of distance detection based on image data can be applied within the scope of protection. Examples of such methods include combination of radio frequency automotive radar and one camera system.

The selection of the control function to be implemented upon the LiDAR unit is a system specific aspect that can be adjusted e.g. according to the applied equipment and local eye safety regulations. Advantageously, the selection is based on the closest detected object in the control field of view. When the control function is determined, the control unit implements (stage 512) selected control function that controls the operation of the LiDAR unit.

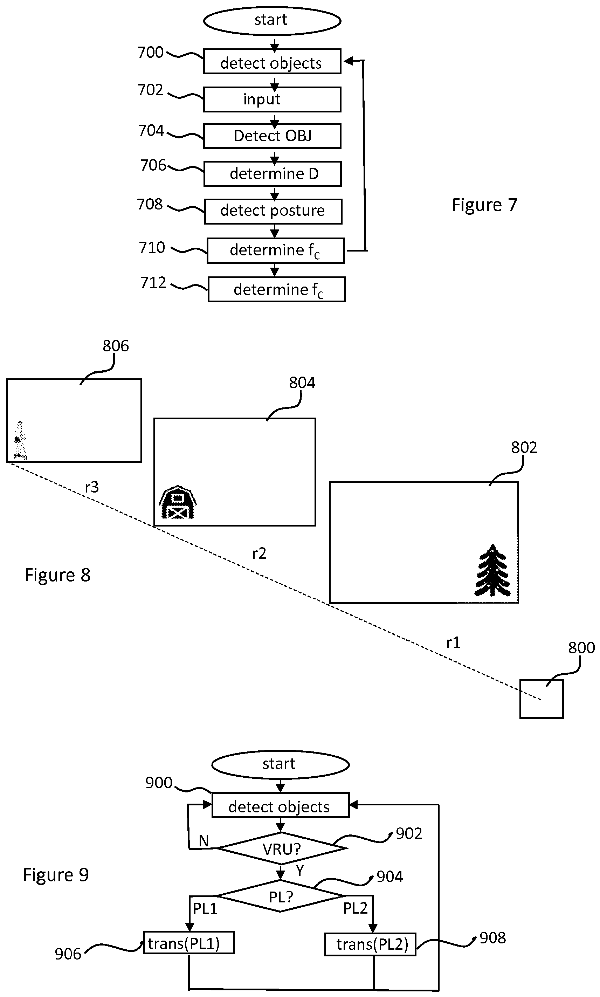

Figure 7 illustrates a further example of a method to be implemented in the light-emitting device 100. The beginning of the present example includes similar stages as the methods of Figures 4 and 5. The camera unit generates (stage 700) a batch of image data in the first field of view FOV1. Advantageously, the camera unit is again a multicamera system that includes at least two operatively coupled cameras, as in Figure 5. The image data captured from the first field of view by at least one of the cameras is input (stage 702) to the control unit. In the manner discussed with Figure 4 the control unit then detects (stage 704) from the image one or more data objects that are in the field of control view of the device and belong to a class of vulnerable road users.

In this example, the need for LiDAR control is, however, determined based on the posture of the detected vulnerable read user. More specifically, the image frame is further analysed to determine whether the detected object is facing the device or not. This posture determination may be implemented as a continuation to the method of Figure 4, i.e. without determining distance(s) to the detected vulnerable road user(s). Alternatively, the posture determination may be implemented after the determination of the distances. The example of Figure 7 illustrates the latter option, so the associate configuration of the camera unit may be referred from Figure 6.

In order to more optimally control the operation of the LiDAR unit, in this example, the control unit again determines (stage 706) distances to the one or more detected objects. However, before determining a control function to be implemented by the LiDAR unit, the control unit is further configured to determine posture of at least one of the detected objects and use the determined posture information in selection of the control function to be implemented. The determination of the posture may be implemented, for example by analysing whether eyes of a detected vulnerable road user can be extracted from the image data or not. Determination of posture may include, for example, detection of face area of the detected object. This can be implemented, for example, by using OpenCV library tool DNN (Deep Neural Network) to detect coordinates of a face area within the cluster of coordinates forming a detected object. Eye-detection can then be conducted by using feature extraction from facial features within the detected face area. For example, TensorFlow machine learning platform provides a tool for landmark detection applicable to detect face area defining coordinates (landmarks). Coordinates of selected facial features, like the tip of the nose, corners of eyes and position of the mouth represent an overall trend of pose of the detected object. Specifically, detection of eyes enables determining whether the line of vision of the vulnerable road user is towards the LiDAR or not and this information can be used as part of the decision-making process suitable to select an appropriate control function for the operation of the LiDAR unit. For example, if eyes of detected objects cannot be detected, if can be deduced that none of the detected vulnerable road users looks at the device, and the control decision may be that LiDAR transmission power does not need to be reduced at all.

Some LiDAR systems may function safely in common operational situations, but in difficult weather conditions, the control field of view may be obscured by e.g. smoke, haze or dust. Due to these, transmission power of the LiDAR should be stepped up, but this cannot be done without specifically ensuring eye-safety of other road users. The further problem in such situations is that the atmospheric interference disturbs also capture of images and thus detection of VRUs from image data. To solve this, according to the invention, the camera unit is a gated camera. Figure 8 illustrates an embodiment wherein a light-emitting device 800 includes a gated camera that is configured to forward to the control unit image data items. Each of these image data items includes data that is collected from a predetermined range from the device.

Basics of gated imaging are described, for example, in US patent publication 7,379,164 B2. A gated camera is based on a time-synchronised camera and a pulsed laser that generates image data items by sending eye safe illumination pulses, each of which illuminates the field of view for a very short time. After a set delay, a camera imager is exposed for a short period so that only light directly reflected from a specific distance is captured into an image data item. This means that backscattered light from smoke, haze, rain or dust and from reflections on the ground does not compromise the quality of the image. Due to the synchronised operation, also information on the range, meaning information on the distance between the device and the illuminated area where the reflected light mainly from becomes automatically available.

The example of Figure 8 shows a first image data item 802, which includes data that is collected from the control field of view in a first range r1. A second image data item 804 includes data that is collected from the control field of view in a second range r2 and a third image data item 806 includes data that is collected from the control field of view in a third range r3. The control unit can process these image data items as separate frames. The control unit may detect vulnerable road users in one or more of the image data items and then select the control operation to be implemented and timing for the control operation according to the detection in the at least one image data item. In the example of Figure 8, objects are detected in each image data item 802, 804, 806, but a vulnerable road user is detected in the third image data item 806 only. The distance r3 to the vulnerable road user is known, and the control unit can select a control operation and timing for the control operation accordingly. For example, the control unit may determine that approaching objects in ranges of the first data item and the second data item can be passed without changing the power level of the LiDAR, but when getting closer to the range r3 of the third image data item, a more eye-safe level should be switched on and maintained until the vulnerable road user has been passed. Also the detection posture, described with Figure 7 may be applied. It is also possible to equip the light-emitting device 800 with two gated cameras, each of which is configured to forward to the control unit image data items. The control unit may then process image data items from these two gated cameras in combination to further improve accuracy of the detection of vulnerable road users and determined distances to them.

In some applications, the normal operational mode of the LiDAR unit may be eye-safe, so increased LiDAR power levels and additional measures to maintain eye-safety are needed only in case of adverse ambient conditions. One further advantage enabled through use of gated camera is that in advanced commercially available gated imaging systems, the gated camera is configured with internal algorithms that enable determining a level of interferences in the predetermined ranges of the image data items. In a further embodiment, the gated camera is configured to forward to the control unit an indication on a level of interferences in the predetermined ranges of the image data items. The control unit may then be configured to enable and disable control operations of the LiDAR unit according to the indication on the level of interferences it received from the gated camera. With the arrangement, the one or more parameters that the gated camera forwards to indicate the interferences and schemes of LiDAR control functions can be calibrated to be accurately interactive. This effectively eliminates impact of ambient conditions to the automated eye-safe LiDAR control operations.

The example scheme of Figure 9 provides a simple illustration of operation of the control unit of the light emitting device during processing one image frame operation. As already described with figures 1 to 8, the control unit is communicatively coupled to the camera unit and the LiDAR unit, receives from the camera unit image data and based on this image data continuously detects (stage 900) objects that are in the field of control view of the device and belong to a class of vulnerable road users. During operation, the control unit makes decisions based on the detection of objects in stage 900, determines a power level to be used (stage 904) and provides control commands (stages 906, 908) for adjusting the power level to the LiDAR unit. The power level depends on used wavelengths. I case of near-infrared lasers (e.g. 905 nm) Class 1 level lasers power levels need to be followed when having human eyes in front. In case of, higher wavelength lasers (e.g. 1550 nm), the power can be much higher enabling also object detection more than 100 m away even in foggy/rainy conditions.

Let us assume that in this example, the first power level PL1 is lower than the second power level PL2. The first power level PL1 could be, for example, such that it provides a classified eye-safe mode of operation for the LiDAR, even in very short distances. Based on the detection, the control unit determines (stage 902) whether a vulnerable road user is detected in the field of control view of the device. If such detection is made, the control unit determines which one of the power levels PL1, PL2 to use (stage 904) and provides to the LiDAR unit a control command, which adjusts the LiDAR unit to transmit with a suitable power level.

For example, the control unit may provide to the LiDAR unit a control command (stage 906) that adjusts the LiDAR unit to transmit with the first power level PL1 when it detects from the image data an object that is in the field of control view of the device and belongs to the class of vulnerable road users. On the other hand, the control unit may provide to the LiDAR unit a control command (stage 908) adjusting the LiDAR unit to transmit with the second power level PL2 if it detects from the image data that there is no object that belongs to the class of vulnerable road users in the field of control view of the device.

The method of Figure 9 is a simplified example that outlines basic operational characteristics of the control unit. The provided example may be varied in many ways within the scope of the claims. For example, instead of two power levels, the LiDAR unit may provide a plurality of discrete power levels. The LiDAR transmission power control may even be stepless so that control commands of stages 906, 908 become replaced by a control command that includes an indication of a target power level for the LiDAR. As another example, the determination of power level to be used may include also detection of distance to the vulnerable road user, and/or detection of posture of the vulnerable road user, as discussed with Figures 5 to 8.

## Claims

1. A device (100) including

   a gated camera unit (102) with a first field of view (FOV1) configured to forward to a control unit (106) image data items (802, 804, 806) each including data collected from a predetermined range of distance (r1, r2, r3) from the device (100);
   a LiDAR unit (104) with a second field of view (FOV2);
   the control unit (106) communicatively coupled to the camera unit (102) and the LiDAR unit (104); wherein
   the first field of view (FOV1) and the second field of view (FOV2) are directed to at least partially coincide, a part where the fields of view coincide forming a field of control view of the device;
   the control unit (106) is configured to receive from the camera unit (102) image data captured in the first field of view (FOV1);
   the control unit (106) is configured to detect from the image data objects (606) that are in the field of control view of the device and belong to a class of vulnerable road users, such as humans and/or animals;
   the control unit (106) is configured to control operation of the LiDAR unit (104) based on said detection of objects (606);
   **characterized in that** the gated camera unit is configured to forward to the control unit (106) an indication on a level of atmospheric interferences in predetermined ranges of distances (r1, r2, r3) of the image data items (802, 804, 806); and

the control unit (106) is configured enable and disable control operations by the LiDAR unit (104) according to the indication on the level of atmospheric interferences.

2. A device (100) according to claim 1, **characterized in that** the control unit (106) is configured to determine a control function to be implemented by the LiDAR unit (104) in response to detecting from the image data at least one object (606) that is in the field of control view of the device and belongs to the class of vulnerable road users.

3. A device (100) according to claim 1 or 2, **characterized in that** the control unit (106) is configured to determine distance to at least one object (606) that is in the field of control view of the device and belongs to the class of vulnerable road users and use information on these distances to determine a control function to be implemented by the LiDAR unit (104).

4. A device (100) according to claim 1, **characterized in that**

the control unit (106) is configured to detect from at least one image data item (802, 804, 806) an object (606) that belongs to the class of vulnerable road users; and
the control unit (106) is configured to select the control operation to be implemented by the LiDAR unit (104) and timing for the control operation according to the detection in the at least one image data item (802, 804, 806).

5. A device (100) according to any of the preceding claims, **characterized in that** control unit (106) is configured to determine posture of at least one object (606) that is in the field of control view of the device and belongs to the class of vulnerable road users and use information on the determined posture to determine a control function to be implemented by the LiDAR unit (104).

6. A device (100) according to any of the preceding claims, **characterized in that** the control unit (106) includes a neural network configured to detect of objects (606) that are in the field of control view of the device and belong to the class of vulnerable road users.

7. A device (100) according to claim 6, **characterized in that** the neural network is a convolutional neural network.

8. A device (100) according to any of the preceding claims, **characterized in that** the class of vulnerable road users includes humans and animals.

9. A device (100) according to any of the preceding claims, **characterized in that** the LiDAR unit (104) is configured to transmit laser beams with at least two power levels, wherein one of the two power levels is lower than the other power level;

the LiDAR unit (104) is configured to switch between the power levels based on a control command received from the control unit (106);
the control unit (106) is configured to provide control commands to the LiDAR unit (104) based on the detection of objects (606) that are in the field of control view of the device and belong to the class of vulnerable road users.

10. A device (100) according to claim 9, **characterized in that** the LiDAR unit (104) is configured to transmit laser beams with at least a first power level and a second power level, wherein the first power level is lower than the second power level;
the control unit (106) is configured to provide to the LiDAR unit (104) a control command adjusting the LiDAR unit (104) to transmit with the first power level in response to detecting from the image data an object (606) that is in the field of control view of the device (100) and belongs to the class of vulnerable road users.

11. A device (100) according to claim 10, **characterized in that**
the control unit (106) is configured to provide to the LiDAR unit (104) a control command adjusting the LiDAR unit (104) to transmit with the second power level in response to detecting from the image data that the object (606) no longer exists in the field of control view of the device.

12. A device (100) according to claim 9, **characterized in that** the LiDAR unit (104) is configured to transmit laser beams with at least a first power level and a second power level, wherein the first power level is lower than the second power level;

the control unit (106) is configured to provide to the LiDAR unit (104) a control command adjusting the LiDAR unit (104) to transmit with the first power level in response to detecting from the image data an object (606) that is in the field of control view of the device and belongs to the class of vulnerable road users;
the control unit (106) is configured to provide to the LiDAR unit (104) a control command adjusting the LiDAR unit (104) to transmit with the second power level in response to detecting from the image data that there is no object (606) that belongs to the class of vulnerable road users in the field of control view of the device.

**13.** A device (100) according to any of claims 9 to 12, **characterized in that** the first power level provides a classified eye-safe mode of operation.

**14.** A device (100) according to any of the preceding claims, **characterized in that** the LiDAR unit (104) includes a solid state LiDAR.

**15.** A device (100) according to any of the preceding claims, **characterized in that** the field of control view of the device is defined from an overlap between an angle of view of the camera unit (102) and an angle of view of the LiDAR unit (104) and includes the e predefined range of distances (r1, r2, r3) from the device (100).

## Patentansprüche

**1.** Vorrichtung (100) umfassend:

eine Gated-Kameraeinheit (102) mit einem ersten Sichtfeld (FOV1), die dazu ausgelegt ist, an eine Steuereinheit (106) Bilddatenelemente (802, 804, 806) weiterzuleiten, die jeweils Daten enthalten, die aus einem vorherbestimmten Bereich von Abständen (r1, r2, r3) zur Vorrichtung (100) erfasst wurden;
eine LiDAR-Einheit (104) mit einem zweiten Sichtfeld (FOV2);
die mit der Kameraeinheit (102) und der LiDAR-Einheit (104) kommunikationstechnisch gekoppelte Steuereinheit (106); wobei
das erste Sichtfeld (FOV1) und das zweite Sichtfeld (FOV2) so ausgerichtet sind, dass sie zumindest teilweise deckungsgleich sind, wobei ein Teil, in dem die Sichtfelder deckungsgleich sind, ein Kontrollsichtfeld der Vorrichtung bildet;
die Steuereinheit (106) so ausgelegt ist, dass sie von der Kameraeinheit (102) Bilddaten empfängt, die im ersten Sichtfeld (FOV1) aufgenommen werden;
die Steuereinheit (106) so ausgelegt ist, dass sie aus den Bilddaten Objekte (606) erkennt, die sich im Kontrollsichtfeld der Vorrichtung befinden und zu einer Klasse von ungeschützten Verkehrsteilnehmern, wie Menschen und/oder Tieren, gehören;
die Steuereinheit (106) dazu ausgelegt ist, den Betrieb der LiDAR-Einheit (104) auf Grundlage dieser Erkennung von Objekten (606) zu steuern;
**dadurch gekennzeichnet, dass** die Gated-Kameraeinheit dazu ausgelegt ist, eine Angabe über einen Grad von atmosphärischen Störungen in vorherbestimmten Bereich von Abständen (r1, r2, r3) der Bilddatenelemente (802, 804, 806) an die Steuereinheit (106) weiterzuleiten;

und
die Steuereinheit (106) so ausgelegt ist, dass sie Steuerungsvorgänge der LiDAR-Einheit (104) entsprechend der Angabe über den Grad der atmosphärischen Störungen aktiviert und deaktiviert.

**2.** Vorrichtung (100) nach Anspruch 1, **dadurch gekennzeichnet, dass** die Steuereinheit (106) dazu ausgelegt ist, eine von der LiDAR-Einheit (104) zu realisierende Steuerfunktion in Reaktion darauf zu bestimmen, dass aus den Bilddaten mindestens ein Objekt (606) erkannt wird, das sich im Kontrollsichtfeld der Vorrichtung befindet und zur Klasse der ungeschützten Verkehrsteilnehmer gehört.

**3.** Vorrichtung (100) nach Anspruch 1 oder 2, **dadurch gekennzeichnet, dass** die Steuereinheit (106) dazu ausgelegt ist, einen Abstand zu mindestens einem Objekt (606), das sich im Kontrollsichtfeld der Vorrichtung befindet und zur Klasse der ungeschützten Verkehrsteilnehmer gehört, zu bestimmen und Informationen über diese Abstände zur Bestimmung einer von der LiDAR-Einheit (104) zu realisierenden Steuerfunktion zu verwenden.

**4.** Vorrichtung (100) nach Anspruch 1, **dadurch gekennzeichnet, dass**

die Steuereinheit (106) dazu ausgelegt ist, aus mindestens einem Bilddatenelement (802, 804, 806) ein Objekt (606) zu erkennen, das zur Klasse der ungeschützten Verkehrsteilnehmer gehört; und
die Steuereinheit (106) dazu ausgelegt ist, den von der LiDAR-Einheit (104) zu realisierenden Steuervorgang und den Zeitpunkt für den Steuervorgang entsprechend der Erkennung in dem mindestens einen Bilddatenelement (802, 804, 806) auszuwählen.

**5.** Vorrichtung (100) nach einem der vorhergehenden Ansprüche, **dadurch gekennzeichnet, dass** die Steuereinheit (106) dazu ausgelegt ist, die Haltung mindestens eines Objekts (606), das sich im Kontrollsichtfeld der Vorrichtung befindet und zur Klasse der ungeschützten Verkehrsteilnehmer gehört, zu bestimmen und Informationen über die bestimmte Haltung zur Bestimmung einer von der LiDAR-Einheit (104) zu realisierenden Steuerfunktion zu verwenden.

**6.** Vorrichtung (100) nach einem der vorhergehenden Ansprüche, **dadurch gekennzeichnet, dass** die Steuereinheit (106) ein neuronales Netz umfasst, das dazu ausgelegt ist, Objekte (606) zu erkennen, die sich im Kontrollsichtfeld der Vorrichtung befinden und zur Klasse der ungeschützten Verkehrsteilnehmer gehören.

7. Vorrichtung (100) nach Anspruch 6, **dadurch gekennzeichnet, dass** das neuronale Netz ein faltungsneuronales Netz ist.

8. Vorrichtung (100) nach einem der vorhergehenden Ansprüche, **dadurch gekennzeichnet, dass** die Klasse der ungeschützten Verkehrsteilnehmer Menschen und Tiere umfasst.

9. Vorrichtung (100) nach einem der vorhergehenden Ansprüche, **dadurch gekennzeichnet, dass**

die LiDAR-Einheit (104) dazu ausgelegt ist, Laserstrahlen mit mindestens zwei Leistungsniveaus zu senden, wobei eines der beiden Leistungsniveaus niedriger ist als das andere Leistungsniveau;
die LiDAR-Einheit (104) dazu ausgelegt ist, auf Grundlage eines aus der Steuereinheit (106) empfangenen Steuerbefehls zwischen den Leistungsniveaus umzuschalten;
die Steuereinheit (106) dazu ausgelegt ist, auf Grundlage der Erkennung von Objekten (606), die sich im Kontrollsichtfeld der Vorrichtung befinden und zur Klasse der gefährdeten Verkehrsteilnehmer gehören, Steuerbefehle an die LiDAR-Einheit (104) bereitzustellen.

10. Vorrichtung (100) nach Anspruch 9, **dadurch gekennzeichnet, dass**

die LiDAR-Einheit (104) dazu ausgelegt ist, Laserstrahlen mit mindestens einem ersten Leistungsniveau und einem zweiten Leistungsniveau zu senden, wobei das erste Leistungsniveau niedriger ist als das zweite Leistungsniveau;
die Steuereinheit (106) dazu ausgelegt ist, in Reaktion darauf, dass aus den Bilddaten ein Objekt (606) erkannt wird, das sich im Kontrollsichtfeld der Vorrichtung befindet und zur Klasse der ungeschützten Verkehrsteilnehmer gehört, an die LiDAR-Einheit (104) einen die LiDAR-Einheit (104) anpassenden Steuerbefehl zum Senden mit dem ersten Leistungsniveau bereitzustellen.

11. Vorrichtung (100) nach Anspruch 10, **dadurch gekennzeichnet, dass**
die Steuereinheit (106) dazu ausgelegt ist, in Reaktion darauf, dass aus den Bilddaten erkannt wird, dass sich das Objekt (606) nicht mehr im Kontrollsichtfeld der Vorrichtung befindet, an die LiDAR-Einheit (104) einen die LiDAR-Einheit (104) anpassenden Steuerbefehl zum Senden mit dem zweiten Leistungsniveau bereitzustellen.

12. Vorrichtung (100) nach Anspruch 9, **dadurch gekennzeichnet, dass**

die LiDAR-Einheit (104) dazu ausgelegt ist, Laserstrahlen mit mindestens einem ersten Leistungsniveau und einem zweiten Leistungsniveau zu senden, wobei das erste Leistungsniveau niedriger ist als das zweite Leistungsniveau;
die Steuereinheit (106) dazu ausgelegt ist, in Reaktion darauf, dass aus den Bilddaten mindestens ein Objekt (606) erkannt wird, das sich im Kontrollsichtfeld der Vorrichtung befindet und zur Klasse der ungeschützten Verkehrsteilnehmer gehört, an die LiDAR-Einheit (104) einen die LiDAR-Einheit (104) anpassenden Steuerbefehl zum Senden mit dem ersten Leistungsniveau bereitzustellen;
die Steuereinheit (106) dazu ausgelegt ist, in Reaktion darauf, dass aus den Bilddaten erkannt wird, dass sich kein zur Klasse der ungeschützten Verkehrsteilnehmer gehörendes Objekt (606) im Kontrollsichtfeld der Vorrichtung befindet, an die LiDAR-Einheit (104) einen die LiDAR-Einheit (104) anpassenden Steuerbefehl zum Senden mit dem zweiten Leistungsniveau bereitzustellen.

13. Vorrichtung (100) nach einem der Ansprüche 9 bis 12, **dadurch gekennzeichnet, dass** das erste Leistungsniveau eine als augensicher eingestufte Betriebsart bereitstellt.

14. Vorrichtung (100) nach einem der vorhergehenden Ansprüche, **dadurch gekennzeichnet, dass** die LiDAR-Einheit (104) ein Festkörper-LiDAR umfasst.

15. Vorrichtung (100) nach einem der vorhergehenden Ansprüche, **dadurch gekennzeichnet, dass** das Kontrollsichtfeld der Vorrichtung anhand einer Überlappung zwischen einem Blickwinkel der Kameraeinheit (102) und einem Blickwinkel der LiDAR-Einheit (104) definiert ist und den vordefinierten Bereich von Abständen (r1, r2, r3) zur Vorrichtung (100) umfasst.

**Revendications**

1. Dispositif (100) comprenant :

une unité de caméra à fenêtre temporelle (102) avec un premier champ de vision (FOV1) configurée pour relayer à une unité de commande (106) des éléments de données d'image (802, 804, 806) comprenant chacun des données collectées dans une plage prédéfinie de distances (r1, r2, r3) par rapport au dispositif (100);

une unité LiDAR (104) avec un deuxième champ de vision (FOV2);

l'unité de commande (106) couplée de manière communicative à l'unité de caméra (102) et à l'unité LiDAR (104); dans lequel

le premier champ de vision (FOV1) et le deuxième champ de vision (FOV2) sont orientés de manière à coïncider au moins partiellement, une partie dans laquelle les champs de vision coïncident formant un champ de vision de contrôle du dispositif;

l'unité de commande (106) est configurée pour recevoir de l'unité de caméra (102) des données d'image capturées dans le premier champ de vision (FOV1);

l'unité de commande (106) est configurée pour détecter, à partir des données d'image, des objets (606) qui se trouvent dans le champ de vision de contrôle du dispositif et appartiennent à une classe d'usagers de la route vulnérables, tels que êtres humains et/ou animaux;

l'unité de commande (106) est configurée pour commander le fonctionnement de l'unité LiDAR (104) sur la base de ladite détection d'objets (606);

**caractérisé en ce que** l'unité de caméra à fenêtre temporelle est configurée pour relayer à l'unité de commande (106) une indication sur un niveau d'interférences atmosphériques dans des plages de distances prédéterminées (r1, r2, r3) des éléments de données d'image (802, 804, 806); et

l'unité de commande (106) est configurée pour activer et désactiver les opérations de commande par l'unité LiDAR (104) en fonction de l'indication sur le niveau d'interférences atmosphériques.

2. Dispositif (100) selon la revendication 1, **caractérisé en ce que** l'unité de commande (106) est configurée pour déterminer une fonction de commande à mettre en œuvre par l'unité LiDAR (104) en réponse à la détection, à partir des données d'image, d'au moins un objet (606) qui se trouve dans le champ de vision de contrôle du dispositif et appartient à la classe des usagers de la route vulnérables.

3. Dispositif (100) selon la revendication 1 ou 2, **caractérisé en ce que** l'unité de commande (106) est configurée pour déterminer une distance par rapport à au moins un objet (606) qui se trouve dans le champ de vision de contrôle du dispositif et appartient à la classe des usagers de la route vulnérables et utiliser les informations sur lesdites distances pour déterminer une fonction de commande à mettre en œuvre par l'unité LiDAR (104).

4. Dispositif (100) selon la revendication 1, **caractérisé**

**en ce que**

l'unité de commande (106) est configurée pour détecter à partir d'au moins un élément de données d'image (802, 804, 806) un objet (606) qui appartient à la classe des usagers de la route vulnérables; et

l'unité de commande (106) est configurée pour sélectionner l'opération de commande à mettre en œuvre par l'unité LiDAR (104) et le moment de l'opération de commande en fonction de la détection dans au moins un élément de données d'image (802, 804, 806).

5. Dispositif (100) selon l'une des revendications précédentes, **caractérisé en ce que** l'unité de commande (106) est configurée pour déterminer la posture d'au moins un objet (606) qui se trouve dans le champ de vision de contrôle du dispositif et appartient à la classe des usagers de la route vulnérables et utiliser les informations sur la posture déterminée pour déterminer une fonction de commande à mettre en œuvre par l'unité LiDAR (104).

6. Dispositif (100) selon l'une des revendications précédentes, **caractérisé en ce que** l'unité de commande (106) comprend un réseau neuronal configuré pour détecter des objets (606) qui se trouvent dans le champ de vision de contrôle du dispositif et appartiennent à la classe des usagers de la route vulnérables.

7. Dispositif (100) selon la revendication 6, **caractérisé en ce que** le réseau neuronal est un réseau neuronal convolutif.

8. Dispositif (100) selon l'une des revendications précédentes, **caractérisé en ce que** la classe des usagers de la route vulnérables comprend les êtres humains et les animaux.

9. Dispositif (100) selon l'une des revendications précédentes, **caractérisé en ce que**

l'unité LiDAR (104) est configurée pour transmettre des faisceaux laser avec au moins deux niveaux de puissance, l'un des deux niveaux de puissance étant inférieur à l'autre niveau de puissance;

l'unité LiDAR (104) est configurée pour basculer entre les niveaux de puissance sur la base d'une commande de contrôle reçue de l'unité de commande (106);

l'unité de commande (106) est configurée pour fournir des commandes de contrôle à l'unité LiDAR (104) sur la base de la détection d'objets (606) qui se trouvent dans le champ de vision de contrôle du dispositif et appartiennent à la classe des usagers de la route vulnérables.

10. Dispositif (100) selon la revendication 9, **caractérisé en ce que**

l'unité LiDAR (104) est configurée pour transmettre des faisceaux laser avec au moins un premier niveau de puissance et un deuxième niveau de puissance, le premier niveau de puissance étant inférieur au deuxième niveau de puissance;

l'unité de commande (106) est configurée pour fournir à l'unité LiDAR (104) une commande de contrôle ajustant l'unité LiDAR (104) pour une transmission avec le premier niveau de puissance en réponse à la détection, à partir des données d'image, d'un objet (606) qui se trouve dans le champ de vision de contrôle du dispositif (100) et appartient à la classe des usagers de la route vulnérables.

11. Dispositif (100) selon la revendication 10, **caractérisé en ce que**
l'unité de commande (106) est configurée pour fournir à l'unité LiDAR (104) une commande de contrôle ajustant l'unité LiDAR (104) pour une transmission avec le deuxième niveau de puissance en réponse à la détection à partir des données d'image que l'objet (606) n'existe plus dans le champ de vision de contrôle du dispositif.

12. Dispositif (100) selon la revendication 9, **caractérisé en ce que**

l'unité LiDAR (104) est configurée pour transmettre des faisceaux laser avec au moins un premier niveau de puissance et un deuxième niveau de puissance, le premier niveau de puissance étant inférieur au deuxième niveau de puissance;

l'unité de commande (106) est configurée pour fournir à l'unité LiDAR (104) une commande de contrôle ajustant l'unité LiDAR (104) pour une transmission avec le premier niveau de puissance en réponse à la détection, à partir des données d'image, d'un objet (606) qui se trouve dans le champ de vision de contrôle du dispositif et appartient à la classe des usagers de la route vulnérables;

l'unité de commande (106) est configurée pour fournir à l'unité LiDAR (104) une commande de contrôle ajustant l'unité LiDAR (104) pour une transmission avec le deuxième niveau de puissance en réponse à la détection à partir des données d'image qu'il n'y a aucun d'objet (606) appartenant à la classe des usagers de la route vulnérables dans le champ de vision de contrôle du dispositif.

13. Dispositif (100) selon l'une des revendications 9 à 12, **caractérisé en ce que** le premier niveau de puissance fournit un mode de fonctionnement classé comme sans danger pour les yeux.

14. Dispositif (100) selon l'une des revendications précédentes, **caractérisé en ce que** l'unité LiDAR (104) comprend un LiDAR à l'état solide.

15. Dispositif (100) selon l'une des revendications précédentes, **caractérisé en ce que** le champ de vision de contrôle du dispositif est défini à partir d'un chevauchement entre un angle de vision de l'unité de caméra (102) et un angle de vision de l'unité LiDAR (104) et comprend la plage prédéfinie de distances (r1, r2, r3) par rapport au dispositif (100).

100

102

CAM

CTRL

106

LIDAR

104

Figure 1a

102

CAM

FOV1

Figure 1b

104

LIDAR

FOV2

Figure 1c

Figure 2

Figure 3

Figure 4

Figure 5

Figure 6

start

700 detect objects

702 input

704 Detect OBJ

706 determine D

708 detect posture

710 determine $f_c$

712 determine $f_c$

Figure 7

806

804

802

r3

r2

Figure 8

r1

800

Figure 9

start

900 detect objects

902 VRU?

N

Y

904 PL?

PL1

PL2

906 trans(PL1)

908 trans(PL2)

**EP 4 476 561 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210109217 A1
- US 20150332102 A1
- US 20170061632 A1
- US 20200018854 A1
- EP 3553556 A1
- US 7379164 B2